# EUROPEAN PATENT APPLICATION

(11) **EP 4 265 672 A1**
(43) Date of publication of application: **25.10.2023**
(21) Application number: 21907006.7
(22) Date of filing: 10.12.2021
(51) Int. Cl.: C08J 5/18, C08K 3/04, C08K 9/04, H01M 50/124, H01M 50/105, H01M 50/126

(54) **NYLON FILM, METHOD FOR PRODUCING SAME, AND ALUMINUM POUCH FILM COMPRISING SAME FOR SECONDARY BATTERY**

(30) Priority: 18.12.2020 KR 20200179030; 24.11.2021 KR 20210163354
(71) Applicant: SBTL Advanced Materials Co. Ltd., Hwaseong-si, Gyeonggi-do 18559 (KR)
(72) Inventor: SHIM, Jun Ho, Seoul 08329 (KR); CHUN, Sang Wook, Hwaseong-si, Gyeonggi-do 18442 (KR); PARK, Sung Il, Cheonan-si, Chungcheongnam-do 31114 (KR); JANG, Pill Gyu, Daejeon 34404 (KR); LEE, Soon Sik, Cheongju-si, Chungcheongbuk-do 28121 (KR)
(74) Representative: dompatent von Kreisler Selting Werner - Partnerschaft von Patent- und Rechtsanwälten mbB
(86) International application number: PCT/KR2021/018772
(87) International publication number: WO 2022/131702

(57) **Abstract**

The present invention relates to a nylon film including graphene, which includes one or more types of functional groups selected from the group consisting of carboxyl (-COOH), ketone (C=O) and amide (CONH) on a surface thereof, at a concentration of 10 ppm to 10,000 ppm concentration, a method for producing the same, and an aluminum pouch film for a secondary battery including the nylon film.

## Description

### [Technical Field]

The present application claims the benefit of priority based on Korean Patent Application No. 10-2020-0179030 filed on December 18, 2020, and Korean Patent Application No. 10-2021-0163354 filed on November 24, 2021, the entire contents of which are incorporated herein by reference.

The present invention relates to a nylon film, a method for producing the same, and an aluminum pouch film for a secondary battery including the same.

### [Background Art]

A lithium secondary battery refers to a battery generating a current through lithium ion migration, and a pouch for a secondary battery is used as an exterior material for packaging such a secondary battery. The pouch for a secondary battery has a form having an aluminum thin film interposed in order to protect a battery cell formed with an electrode assembly and an electrolyte solution flowing thereinto by a subsequent process, to supplement electrochemical properties of the battery cell, and to improve heat dissipation and the like.

On one surface of the aluminum thin film, a functional polymer film layer such as a polyethylene terephthalate (PET) resin, a polyethylene naphthalate (PEN) resin, a nylon resin or a liquid crystal polymer (LCP) resin is laminated as an outer resin layer in order to protect the battery cell from external impact.

In addition, on the other surface of the aluminum thin film, an inner resin layer is formed by a polyolefin such as polyethylene (PE), casted polypropylene (cPP) or polypropylene (PP) or a copolymer thereof in order for adhesion between a lower surface of the upper pouch and an upper surface of the lower pouch.

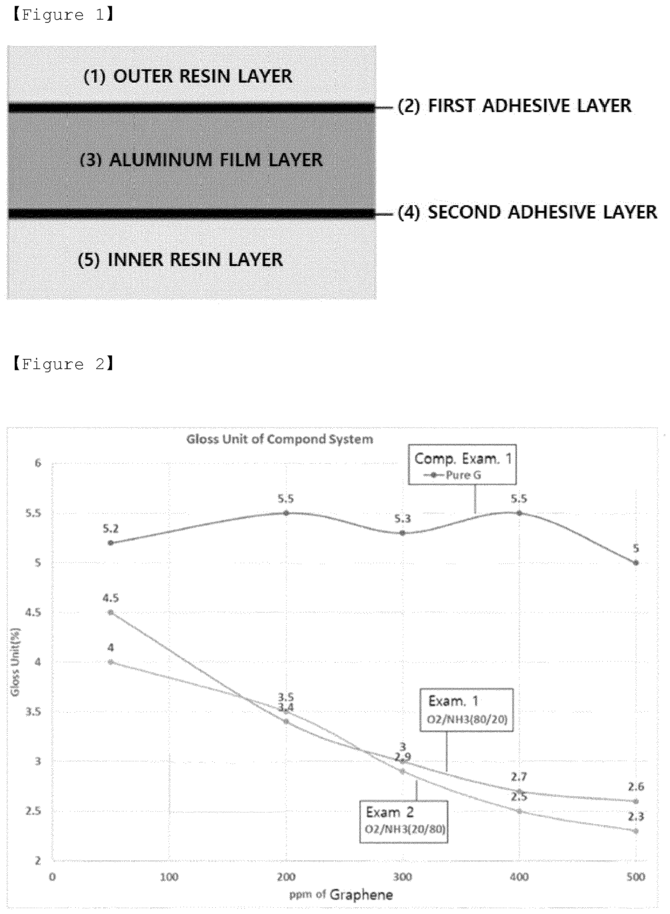

Generally, an upper pouch film forming an aluminum pouch for a secondary battery has a structure in which an outer resin layer, an adhesive layer, an aluminum film layer, an adhesive layer and an inner resin layer are laminated in this order as illustrated in FIG. 1, and a lower pouch film has a structure in which an inner resin layer, an adhesive layer, an aluminum film layer, an adhesive layer and an outer resin layer are laminated in this order.

A nylon film has excellent properties in terms of disruptive strength, pinhole resistance, gas barrier properties, heat resistance, cold resistance, mechanical strength and the like, and is used as an outer resin layer of an aluminum pouch film for a secondary battery.

Meanwhile, in a silver-type aluminum pouch film using a nylon film as an outer resin layer, the presence of a small size sol/gel with a diameter of 500 um or less inside the nylon film is classified as appearance defects, leading to disposal of the pouch film, although such a sol/gel does not affect properties of the pouch film.

Accordingly, in order to provide hiding power to the appearance of the nylon film, black color is provided. The black color is required to be uniformly provided to the nylon film for the appearance of the pouch film. In addition, it is required that providing the black color does not increase a surface friction coefficient of the nylon film, and furthermore, reduces the surface friction coefficient.

However, technologies satisfying such requirements have not yet been developed.

### [Prior Art Document]

### [Patent Document]

Korean Laid-open Patent Publication No. 10-2016-0077968

### [Disclosure]

### [Technical Problem]

The present invention has been made to solve the above problems of the prior art, and is aimed to provide a nylon film having excellent hiding power due to black coloring and providing excellent slip properties due to a low surface friction coefficient, a method for producing the same, and an aluminum pouch film for a secondary battery including the same.

### [Technical Solution]

In order to achieve the above object, the present invention provides a nylon film including graphene, which includes one or more types of functional groups selected from the group consisting of carboxyl (-COOH), ketone (C=O) and amide (CONH) on a surface thereof, at a concentration of 10 ppm to 10,000 ppm.

In addition, the present invention provides an aluminum pouch film for a secondary battery, the film including:
an aluminum film layer;
an outer resin layer formed with the nylon film of the present invention laminated on one surface of the aluminum film layer; and
an inner resin layer laminated on the other surface of the aluminum film layer.

In addition, the present invention provides a method for producing a nylon film, the method including:
(a) surface treating graphene particles with an oxygen and ammonia mixture gas plasma;
(b) mixing the surface-treated graphene particles with a nylon resin at a concentration of 10 ppm to 10,000 ppm; and
(c) molding a film using the mixture.

### [Advantageous Effects]

A nylon film of the present invention includes surface-treated graphene, thereby having excellent hiding power due to black coloring, and providing excellent slip properties due to a low surface friction coefficient.

An aluminum pouch film for a secondary battery of the present invention includes the nylon film as an outer resin layer, thereby providing excellent appearance and moldability.

A method for producing a nylon film of the present invention provides a method for efficiently producing the nylon film.

### [Description of Drawings]

FIG. 1 is a mimetic diagram illustrating a structure of an aluminum pouch film for a secondary battery.
FIG. 2 is a graph showing a result of evaluating the degree of black color development of a nylon film including graphene that is not surface treated or graphene surface-treated with an oxygen and ammonia plasma.
FIG. 3 is a graph showing a result of evaluating a friction coefficient of a nylon film including graphene surface-treated with a plasma while varying the supply amount of oxygen and ammonia.

### [Best Mode]

Hereinafter, embodiments of the present invention will be described in detail with reference to accompanying drawings so that those skilled in the art may readily implement the present invention. However, the present invention may be embodied in various different forms, and is not limited to the embodiments described herein. In addition, the same reference numerals in the drawings refer to the same constituents, and a size or thickness of each constituent may be exaggerated for convenience of description.

In the present specification, a description of a certain member being placed "on" another member includes not only a case of a certain member being in contact with another member but also a case of still another member being present between the two members.

In the present specification, a description that a part "includes" certain constituents means that it may further include other constituents, rather than excluding other constituents unless particularly stated on the contrary.

Hereinafter, preferred embodiments of the present invention will be described in detail.

The present invention relates to a nylon film including graphene, which includes one or more types of functional groups selected from the group consisting of carboxyl (-COOH), ketone (C=O) and amide (CONH) on a surface thereof, at a concentration of 10 ppm to 10,000 ppm.

The graphene may include all of carboxyl (-COOH), ketone (C=O) and amide (CONH) functional groups on a surface thereof.

The carboxyl (-COOH), ketone (C=O) and amide (CONH) functional groups may be included in a ratio of 1: 1 to 4: 1 to 4 and may be more preferably included in a ratio of 1: 1 to 2: 1 to 2 based on the functional group molar ratio.

When the amide (CONH) functional group is included in excess of the above ratio, the amide (CONH) prevents graphene from migrating to the nylon resin surface, which causes a problem of increasing a friction coefficient of the nylon film. On the other hand, when the carboxyl (-COOH) and ketone (C=O) functional groups are included in less than the above range, hydrophilicity of the graphene decreases, reducing a surface migration property of the graphene to the nylon resin, which is not preferable.

The functional groups may be introduced by treating the graphene surface with an oxygen and ammonia mixture gas plasma.

The graphene may have an average diameter of 0.0001 um to 0.5 um, preferably 0.001 um to 0.1 um, and more preferably 0.01 um to 0.6 um.

The graphene having an average diameter of less than 0.0001 um is not preferred since workability is reduced due to difficult handling caused by scattering and the like, and the average diameter exceeding 0.5 um is not preferred in terms of reducing mechanical properties after film processing due to a decrease in the dispersibility in the resin.

As the nylon resin, resins known in the art may be used without limit, and for example, one type selected from the group consisting of polyamide resins such as nylon 6, nylon 66, a copolymer of nylon 6 and nylon 66, nylon 610, and polymetaxylylene adipamide (MXD6), or a mixture of two or more types thereof may be used.

The nylon film may have a thickness of 10 um to 30 µm, and may more preferably have a thickness of 12 um to 25 um. When the thickness is less than 10 µm, the film may be readily torn due to reduced properties, and the thickness exceeding 30 um is not preferred since moldability is reduced.

The nylon film may be used for an outer resin layer included in an aluminum pouch film for a secondary battery.

In addition, the present invention
provides an aluminum pouch film for a secondary battery, the film including: an aluminum film layer; an outer resin layer formed with the nylon film of the present invention laminated on one surface of the aluminum film layer; and an inner resin layer laminated on the other surface of the aluminum film layer.

As for constituents other than the outer resin layer in the aluminum pouch film for a secondary battery, constituents known in the art may be employed without limit.

The nylon film of the present invention has excellent disruptive strength, pinhole resistance, gas barrier properties and the like, and has excellent heat resistance, cold resistance and mechanical strength as well. In addition, the nylon film has excellent hiding power due to superior black color development and provides excellent slip properties due to a low surface friction coefficient, and therefore, may be preferably used as an outer resin layer.

Particularly, the aluminum pouch film for a secondary battery of the present invention provides excellent appearance and moldability by including the nylon film as an outer resin layer.

Between the aluminum film layer and the outer resin layer, a first adhesive layer adhering them may be included, and between the aluminum film layer and the inner resin layer, a second adhesive layer adhering them may be included.

In addition, the present invention relates to a method for producing a nylon film, the method including:
(a) surface treating graphene particles with an oxygen and ammonia mixture gas plasma;
(b) mixing the surface-treated graphene particles with a nylon resin at a concentration of 10 ppm to 10,000 ppm; and
(c) molding a film using the mixture.

In the producing method, descriptions relating to the nylon film described above may all be applied. Accordingly, overlapping descriptions will be omitted.

The oxygen and ammonia mixture gas plasma in (a) may be a plasma formed by supplying an oxygen and ammonia mixture gas in a volume ratio of 90: 10 to 10: 90, preferably 90: 10 to 50: 50, and more preferably 90: 10 to 70: 30.

When ammonia gas is supplied in excess in the above, the content of the amide (CONH) functional group on the graphene surface excessively increases, which is not preferred since such an amide (CONH) functional group prevents the graphene from migrating to the nylon resin, causing a problem of increasing a friction coefficient of the nylon film. On the other hand, supplying too little oxygen gas is not preferred since the content of the carboxyl (-COOH) and ketone (C=O) functional groups on the graphene surface is too low, reducing hydrophilicity, and a surface migration property of the graphene is reduced accordingly.

The plasma treatment in the present invention may be performed using methods known in the art.

As the graphene in (a), those having an average diameter of 0.0001 um to 0.5 um, preferably 0.001 um to 0.1 um, and more preferably 0.01 um to 0.6 um may be used.

The film molding in (c) may be performed using methods known in the art, and for example, an extrusion method may be used.

Hereinbefore, preferred embodiments of the present invention have been described in detail, however, the scope of a right of the present invention is not limited thereto, and various modified and improved forms made by those skilled in the art using the basic concept of the present invention defined in the claims also fall within the scope of a right of the present invention.

### Preparation Example 1: Preparation of Surface-Modified Graphene

A surface of graphene having an average diameter of 0.05 um was modified by plasma treatment while supplying oxygen and ammonia in a ratio of 80 sccm and 20 sccm as a reactive gas. Herein, a frequency of 13.56 MHz and a voltage of 220 V were applied, and plasma was generated under a condition of 25 mTorr, 50 W and 100 seconds.

### Preparation Example 2: Preparation of Surface-Modified Graphene

A surface of graphene having an average diameter of 0.05 um was modified by plasma treatment while supplying oxygen and ammonia in a ratio of 20 sccm and 80 sccm as a reactive gas. Herein, a frequency of 13.56 MHz and a voltage of 220 V were applied, and plasma was generated under a condition of 25 mTorr, 50 W and 100 seconds.

### Example 1: Production of Nylon Film

The surface-modified graphene prepared in Preparation Example 1 was mixed with a nylon chip at a concentration of 100, 200, 300, 400 and 500 ppm, respectively, and the result was extruded to a thickness of 25 um to produce a nylon film.

### Example 2: Production of Nylon Film

The surface-modified graphene prepared in Preparation Example 2 was mixed with a nylon chip at a concentration of 100, 200, 300, 400 and 500 ppm, respectively, and the result was extruded to a thickness of 25 um to produce a nylon film.

### Comparative Example 1: Production of Nylon Film

Graphene that is not surface treated was mixed with a nylon chip at a concentration of 100, 200, 300, 400 and 500 ppm, respectively, and the result was extruded to a thickness of 25 um to produce a nylon film.

### Experimental Example 1: Evaluation of Hiding Power

For each of the nylon films produced in Examples 1 and 2 and Comparative Example 1, the degree of matte black was measured at a measuring angle of 60 degrees according to the ASTM D 523 or ISO 2813, and the results are shown in FIG. 2.

As identified in FIG. 2, the nylon films of Examples 1 and 2 showed matte black color at a level of 2.6 or less as the graphene concentration increases.

On the other hand, in Comparative Example 1, it was identified that the graphene was not dispersed well, and thus uniform black color was not developed on the nylon surface (the gloss unit value was high).

### Experimental Example 2: Measurement of Surface Friction Coefficient

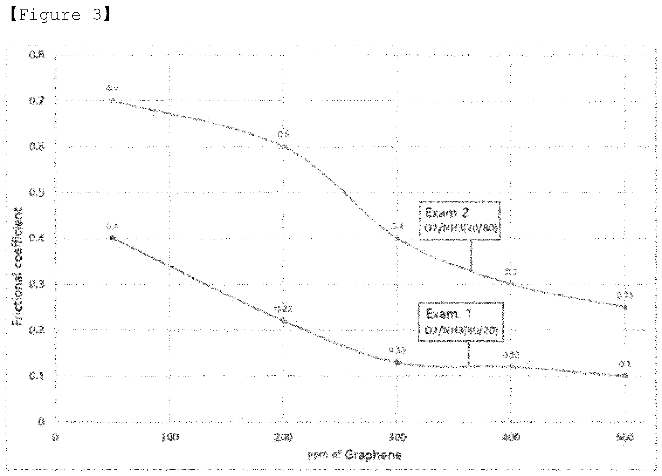

A friction coefficient of the nylon-nylon surface of the nylon film produced in each of Examples 1 and 2 and Comparative Example 1 was measured according to the method of ASTM D 1895 using a friction coefficient measuring device, and the results are shown in FIG. 3.

In the nylon film mixed with plasma non-treated graphene of Comparative Example 1, surface friction was too high, and thus it was impossible to measure a surface friction coefficient.

Among the plasma surface-treated samples, it was identified that the nylon film of Example 2 with a high mixing ratio of ammonia had a high friction coefficient as shown in FIG. 3. This is considered to be due to the fact that, by introducing a relatively large amount of amide (CONH) to the graphene surface, the graphene is not able to migrate to the nylon film surface and is present inside the nylon.

In addition, it was identified that the nylon film of Example 1 having a high mixing ratio of oxygen had a low friction coefficient as shown in FIG. 3. Such a result is considered to be obtained from a decrease in the non-contact area of the surface as the concentration of graphene migrating to the nylon surface increases.

## Claims

1. A nylon film comprising graphene, which includes one or more types of functional groups selected from the group consisting of carboxyl (-COOH), ketone (C=O) and amide (CONH) on a surface thereof, at a concentration of 10 ppm to 10,000 ppm.

2. The nylon film of claim 1, wherein the graphene comprises all of the carboxyl (-COOH), ketone (C=O) and amide (CONH) functional groups on a surface thereof.

3. The nylon film of claim 1, wherein the functional groups are introduced by treating the graphene surface with an oxygen and ammonia mixture gas plasma.

4. The nylon film of claim 1, wherein the graphene has an average diameter of 0.0001 um to 0.5 um.

5. The nylon film of claim 1, wherein the nylon resin is one or more types selected from the group consisting of polyamide resins such as nylon 6, nylon 66, a copolymer of nylon 6 and nylon 66, nylon 610, and polymetaxylylene adipamide (MXD6).

6. The nylon film of claim 1, wherein the nylon film is for an outer resin layer included in an aluminum pouch film for a secondary battery.

7. A method for producing a nylon film, the method comprising:
(a) surface treating graphene particles with an oxygen and ammonia mixture gas plasma;
(b) mixing the surface-treated graphene particles with a nylon resin at a concentration of 10 ppm to 10,000 ppm; and
(c) molding a film using the mixture.

8. The method of claim 7, wherein the oxygen and ammonia mixture gas plasma of (a) is a plasma formed by supplying an oxygen and ammonia mixture gas in a volume ratio of 90: 10 to 10: 90.

9. The method of claim 8, wherein the oxygen and ammonia mixture gas plasma is a plasma formed by supplying an oxygen and ammonia mixture gas in a volume ratio of 90: 10 to 70: 30.

10. The method of claim 7, wherein the film molding in (c) is performed using an extrusion method.

11. An aluminum pouch film for a secondary battery, the film comprising:
an aluminum film layer;
an outer resin layer formed with the nylon film of claim 1 laminated on one surface of the aluminum film layer; and
an inner resin layer laminated on the other surface of the aluminum film layer.
